# EUROPEAN PATENT SPECIFICATION

(11) **EP 4 365 766 B1**
(45) Date of publication and mention of the grant of the patent: **24.12.2025**
(21) Application number: 23208212.3
(22) Date of filing: 07.11.2023
(51) Int. Cl.: G06F 30/17, B33Y 50/02, G06F 30/20, B22F 10/80, B29C 64/386, B33Y 50/00, G06F 113/10, G06F 119/08, G06F 119/18

(54) **ADDITIVE MANUFACTURED COMPONENT INCLUDING WITNESS LINES**
GENERATIV GEFERTIGTE KOMPONENTE MIT ZEUGENLINIEN
COMPOSANT FABRIQUÉ DE MANIÈRE ADDITIVE COMPRENANT DES LIGNES DE TÉMOIN

(30) Priority: 07.11.2022 US 202263423211 P
(43) Date of publication of application: 08.05.2024
(73) Proprietor: RTX Corporation, Farmington, CT 06032 (US)
(72) Inventor: BINEK, Lawrence A., Farmington, 06032 (US); RAMSEY, Christopher D., Farmington, 06032 (US); SATOH, Gen, Farmington, 06032 (US); GARDELL, Benjamin G., Farmington, 06032 (US); SIROIS, Dean R., Farmington, 06032 (US)
(74) Representative: Dehns

(56) References cited:
- EP-A1- 3 579 199
- US-A1- 2014 271 221
- US-A1- 2022 088 881
- GRADL PAUL ET AL: "Having a Come-Apart: Lessons Learned from Additively Manufactured Hardware Failures", 3 November 2022 (2022-11-03), Marshall Space Flight Center, XP093144199, Retrieved from the Internet <URL:https://ntrs.nasa.gov/api/citations/20220016137/downloads/ASTM%20ICAM%20Chamber%20Failure_11-3-2022.pdf> [retrieved on 20240321]
- ANOMYMOUS: "SolidWorks Education Edition Getting Started", INTERNET CITATION, 11 July 2004 (2004-07-11), XP002369214, Retrieved from the Internet <URL:http://web.archive.org/web/20040711181750/http://engr.atu.edu/GettingStarted.pdf> [retrieved on 20060221]
- SEFENE EYOB MESSELE ED - BATTAIA OLGA ET AL: "State-of-the-art of selective laser melting process: A comprehensive review", JOURNAL OF MANUFACTURING SYSTEMS, SOCIETY OF MANUFACTURING ENGINEERS, DEARBORN, MI, US, vol. 63, 1 April 2022 (2022-04-01), pages 250 - 274, XP087081296, ISSN: 0278-6125, [retrieved on 20220409], DOI: 10.1016/J.JMSY.2022.04.002
- LI GUANGXIAN ET AL: "Machinability of additively manufactured titanium alloys: A comprehensive review", JOURNAL OF MANUFACTURING PROCESSES, SOCIETY OF MANUFACTURING ENGINEERS, DEARBORN, MI, US, vol. 75, 11 January 2022 (2022-01-11), pages 72 - 99, XP086963386, ISSN: 1526-6125, [retrieved on 20220111], DOI: 10.1016/J.JMAPRO.2022.01.007

## Description

### BACKGROUND

Exemplary embodiments of the present disclosure relate generally to additive manufactured component, and more particularly, to an additive manufactured component that includes witness lines.

Additively manufactured components are susceptible to a significant amount of distortion and residual stress, particularly following various secondary processes such as, for example, a heating process. To obtain shape accuracy, various techniques are employed to compensate for the dimensional change caused by the distortion that may occur during the secondary processes. Once such technique is to generate a pre-distortion model that takes into account or predicts the distortion that is expected to occur during the secondary processes.

US 2014/271221 A1 discloses a prior art component.

US 2022/088881 A1 and EP 3579199 A1 disclose pre-distorting a CAD model for compensating additive manufacturing deformations.

### BRIEF DESCRIPTION

The invention is a method of manufacturing an additive manufactured (AM) component according to claim 1.

In a further embodiment of any of the previous embodiments, the pre-deformed witness lines deform from the pre-deformed profile while settling during the AM component build prior to the thermal treatment.

In a further embodiment of any of the previous embodiments, the pre-deformed witness lines deform from the pre-deformed profile during the thermal heat treatment.

In a further embodiment of any of the previous embodiments, the pre-deformed witness lines deform from the pre-deformed profile while settling after 1 completing the thermal heat treatment.

In a further embodiment of any of the previous embodiments, the target physical profile is confirmed in response the deformed profile of the witness lines matching the target profile.

In a further embodiment of any of the previous embodiments, the method further comprises generating a build file based on the CAD model, the target area to include the witness lines, and the pre-deformed profile of the witness lines, loading the build file into an AM build machine, and performing the AM build based on the build file. The AM build machine forms the pre-deformed witness lines having the pre-deformed profile in the target area.

In a further embodiment of any of the previous embodiments, performing the AM build includes performing a series of AM material depositions and AM material deposition pauses to build the AM material layer-by-layer at a first target region of the target area while avoiding deposition of the AM material at a second target region of the target area to form the pre-deformed witness lines having the pre-deformed profile in the target area.

### BRIEF DESCRIPTION OF THE DRAWINGS

With reference to the accompanying drawings, like elements are numbered alike:
FIG. 1 is a perspective view of an AM component including witness lines according to a non-limiting embodiment of the present disclosure;
FIG. 2 illustrates a close-up view of witness lines formed on a portion of the AM component shown in FIG. 1 according to a non-limiting embodiment of the present disclosure;
FIG. 3 illustrates a close-up view of witness lines formed on another portion of the AM component shown in FIG. 1 according to a non-limiting embodiment of the present disclosure;
FIG. 4 illustrates a close-up view of witness lines formed on another portion of the AM component shown in FIG. 1 according to a non-limiting embodiment of the present disclosure;
FIG. 5 illustrates a close-up view of pre-deformed witness lines formed on a portion of an AM component according to a non-limiting embodiment of the present disclosure;
FIG. 6 illustrates the AM component of FIG. 5 following deformation of the witness lines according to a non-limiting embodiment of the present disclosure; and
FIG. 7 is a flow diagram illustrating a method of fabricating an AM component including witness lines according to a non-limiting embodiment of the present disclosure.

### DETAILED DESCRIPTION

A detailed description of one or more embodiments of the disclosed apparatus and method are presented herein by way of exemplification and not limitation with reference to the Figures.

Additive manufacturing (AM) represents a large number of processes covering a wide range of materials. AM material such as a metal-based powder, for example, is deposited layer-by-layer in the build direction and can be processed based on the principle of melting or sintering the material. The melting is achieved by applying a heat source (i.e., laser or electron beam) which melts the powder and builds the physical part.

The design of AM industrial parts involves the use of computer-aided design (CAD) algorithms, models, and functionalities for the creation of a digital representation of the physical object which will be additively manufactured. The digital representation can involve the generation of pre-distortion models, which to take into account or predict the distortion that is expected to occur during AM secondary processes such as, thermal heating and/or thermal cooling, along with predicting residual stresses that are common in metal-based fabricated components. An AM tool build filed is generated based on the CAD algorithms and pre-distortion models, which is then loaded into the AM tool. The build file controls the locations and/or amounts of AM material to deposit on a layer-by-layer basis.

Various non-limiting embodiments of the present disclosure provide an AM component including witness lines, and method for fabricating the same. According to one or more non-limiting embodiments, an AM build file can be generated which controls the AM tool to form witness lines during the initial AM fabrication build of the component. The witness lines can be formed with a pre-deformed profile that is defined based in part on the predicted distortion expected for the component. During the secondary processes, the component will realize the expected distortion, which in turn deforms the witness line into a target shape or profile that indicates the component has realized its predicted distortion to reach a targeted physical profile, e.g., a final shape that yields the expected or targeted accurate shape.

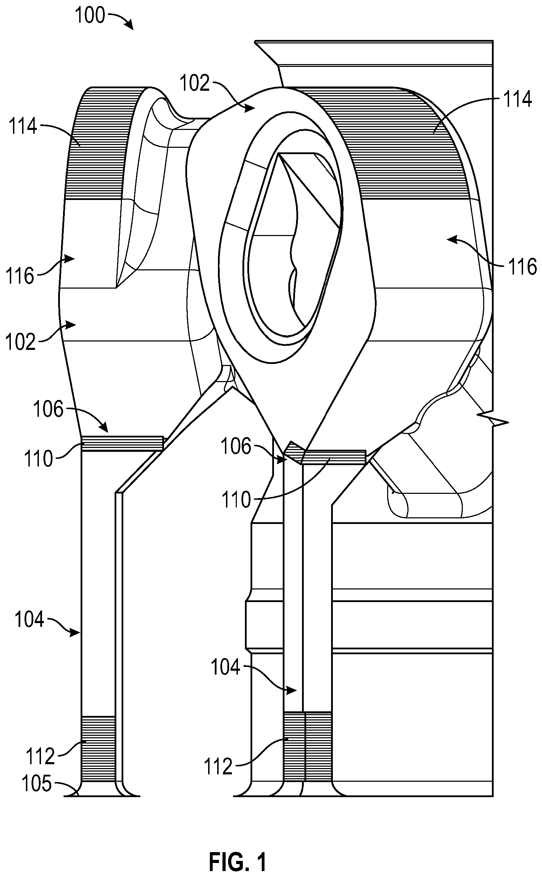

With reference now to FIG. 1, an AM component 100 is illustrated according to a non-limiting embodiment of the present disclosure. In one or more non-limiting embodiments, the AM component can comprise a low-density alloy material or a high-density alloy material. The low-density material includes, but is not limited to, a low-density thermoplastic material, polylactic acid, and a microsphere composite material. The high-density alloy material includes, but is not limited to, Inconel625 (IN625), Inconel718 (IN718), Hastelloy X (Hast-X), various nickel-base (Ni-base) superalloys, 17-4PH stainless steel, and Titanium (Ti).

The non-limiting embodiment of the AM component 100 illustrated in FIG. 1 includes an upper portion 102 and a support structure 104. The support structure 104 extends from a base 105 to a terminus 106 (e.g., an interface 106) defined by a region where the support structure 104 meets the upper portion 102. It should be appreciated that the profiles of the AM component 100 and portions thereof are not limiting and that AM components with different profiles, sizes, shapes and portions/segments can be included.

The AM component 100 includes one or more witness line regions formed on the part 100. According to a non-limiting embodiments, the witness line regions include a first witness line region 110, a second witness line region 112, and a third witness line region 114. Although three witness line regions 110, 112 and 114 are shown, it should be apricated that more or less witness line regions can be formed on the AM component 100. In addition, the locations of the witness line regions 110, 112 and 114 are not limited to those described herein, but rather can be formed at additional or different regions of the AM component 100.

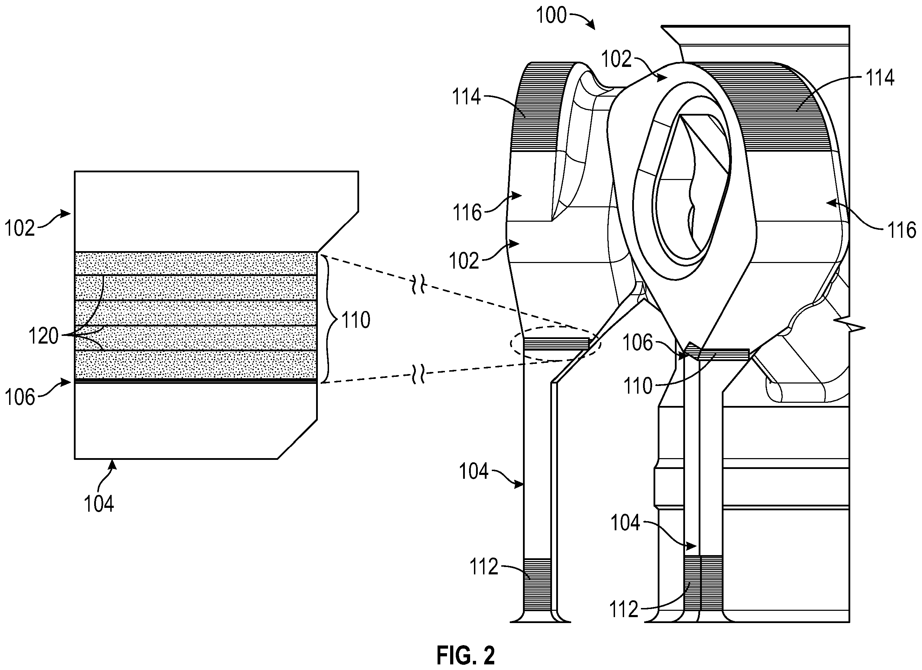

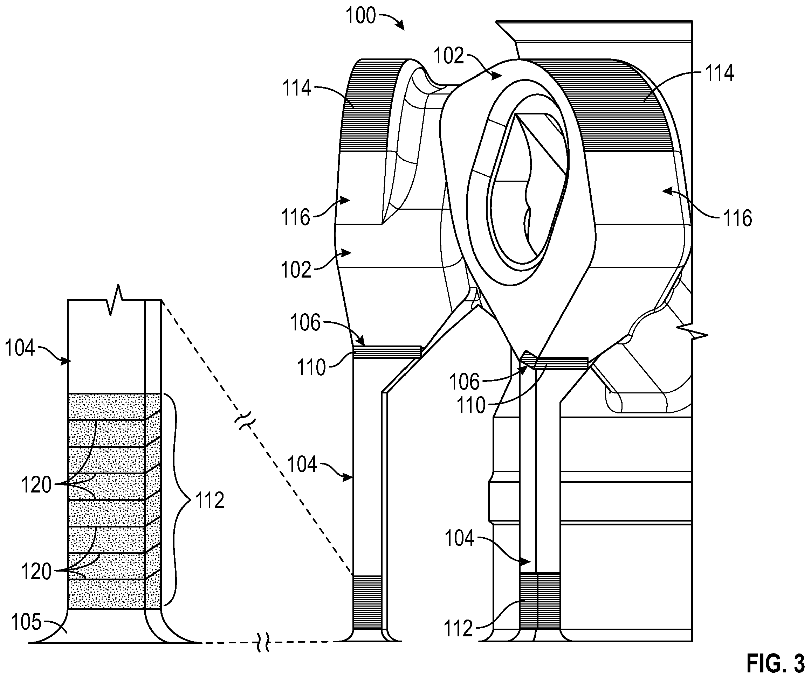

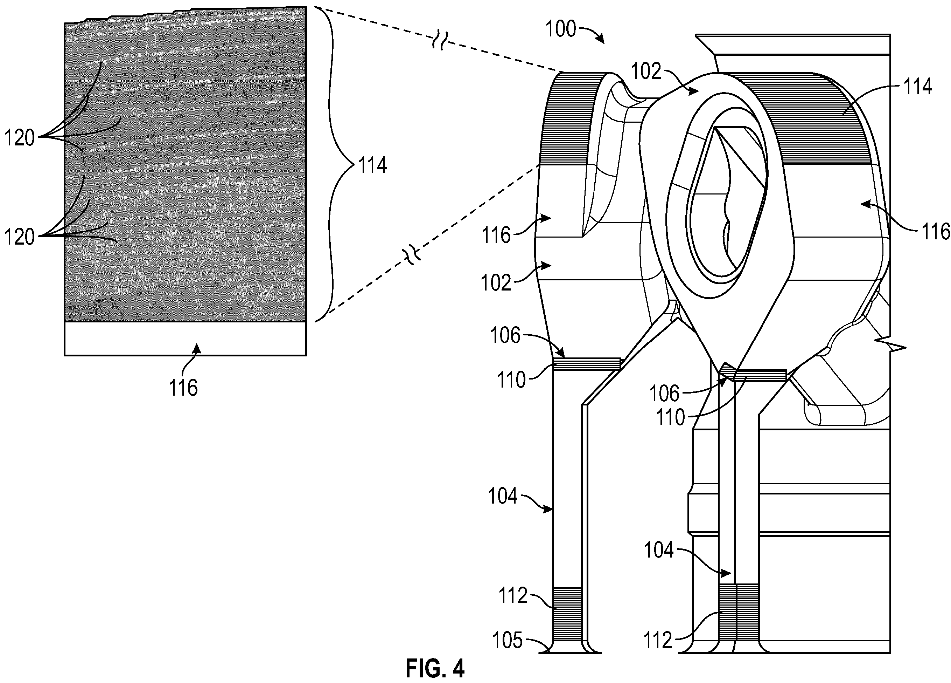

Referring to FIG. 2, for example, first witness line region 110 is formed at the terminus 106. The first witness line region 110 includes a plurality of individual witness lines 120 configured to indicate a deformation of the region where the support structure 104 meets the upper portion 102. Referring to FIG. 3, for example, the second witness line region 112 is formed on a portion (e.g. one or more sides) of the support structure 104. The second witness line region 112 includes a plurality of individual witness lines 120 configured to indicate a deformation of the support structure 104. Referring to FIG. 4, for example, the third witness line region 114 is formed on an upper surface 116 of the upper portion 102. The third witness line region 114 includes a plurality of witness lines 120 configured to indicate a deformation of the upper portion 102.

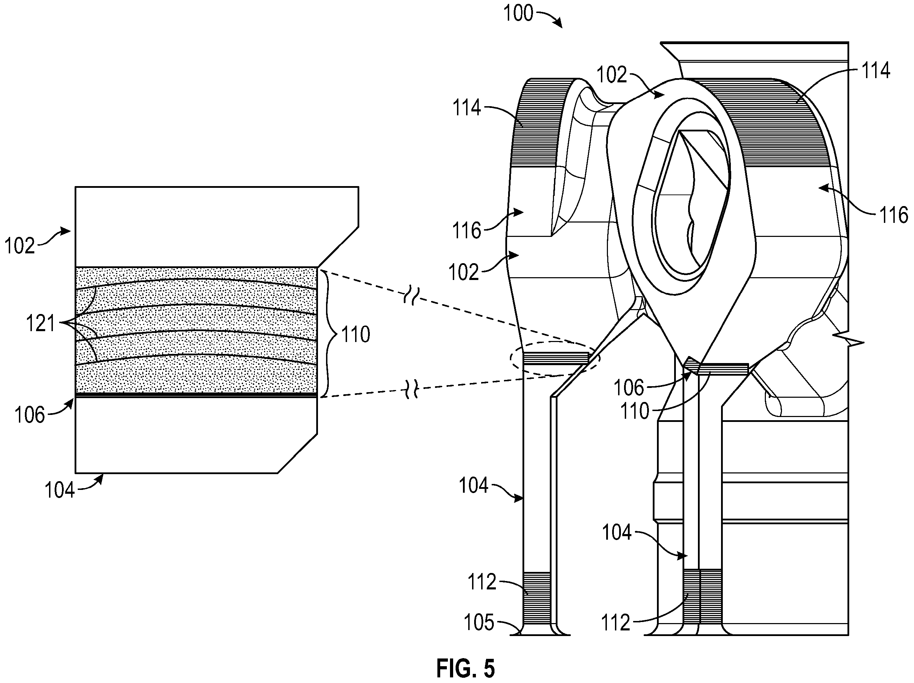

In any of the examples described above, the witness lines 120 are initially formed in their respective witness line regions 110, 112, 114 with a pre-deformed profile. Turning to FIG. 5, for example, pre-deformed witness lines 121 are formed in the first witness region 110. The pre-deformed witness lines 121 are formed with a pre-deformed profile based on a predicted deformation that is expected to occur at the terminus 106.

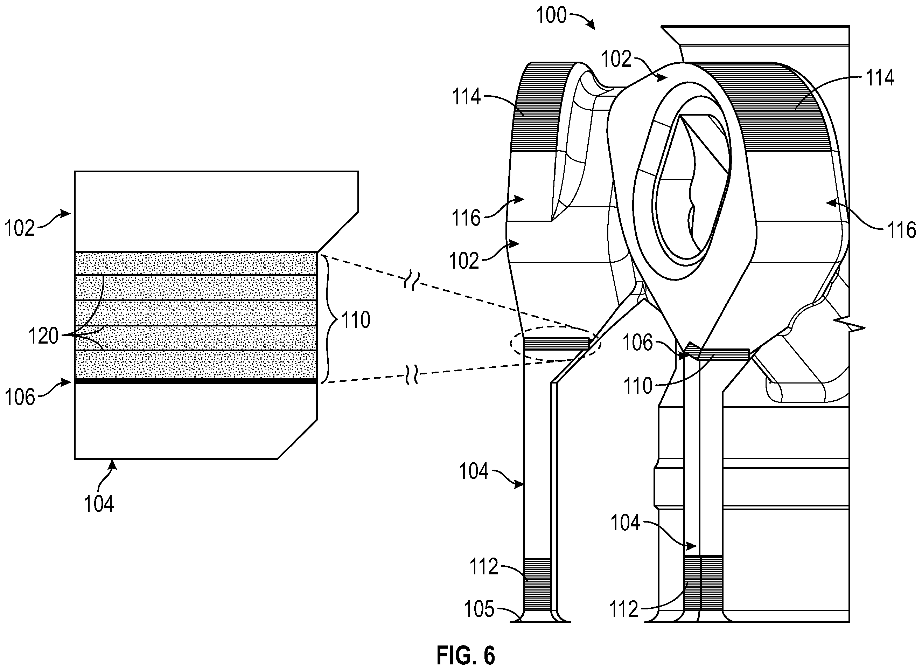

At FIG. 6, the AM component 100 shown in FIG. 5 is illustrated following completing one or more secondary AM processes. For example, the AM component 100 is illustrated after thermal cooling to set and cure the sintered AM material. In this example, the pre-deformed witness lines 121 have deformed during the cooling process to define deformed witness lines 120 having a new target profile. The target profile of the deformed witness lines 120 indicate that the AM component 100 has realized its predicted distortion to reach a final shape that yields the expected or targeted accurate shape. Rather than requiring expensive and costly Xray analysis machines to measure the deformation of the AM component, the deformed witness lines 120 can be viewed through an optical camera, or in some cases the naked eye, to quickly and conveniently confirm that the AM component 100 has accurately deformed to yield the targeted shape and profile.

In one or more non-limiting embodiments, the witness lines 120 can be utilized as reference mechanism when performing one or more secondary manufacturing processes. When performing a polishing process, for example, the witness lines can indicate a region that is targeted for polishing. Accordingly, the polishing can be performed on the witness line region and performed until the witness lines 120 are removed (e.g., planarized) and the surface is smooth to the touch. In other embodiments, the witness lines 120 can indicate a region to be excluded from polishing. In this manner, the witness lines 120 can be utilized as reference lines indicating the location to stop a polishing process.

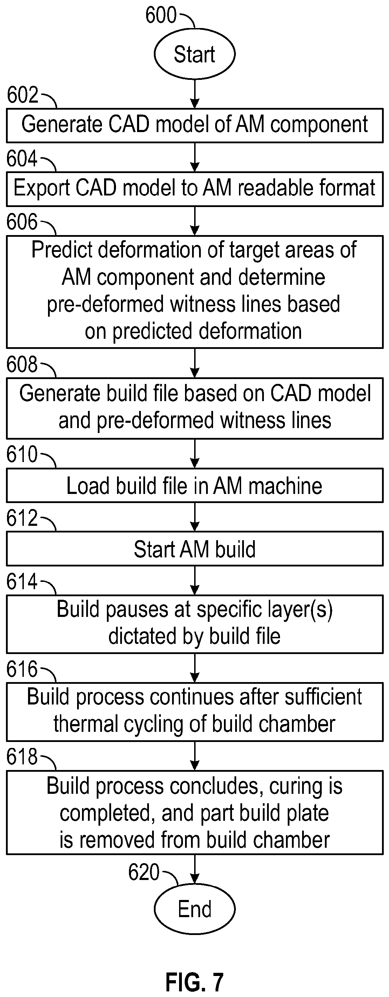

Turning to FIG. 7, a method of fabricating an AM component including witness lines is illustrated according to a non-limiting embodiment. The method begins at operation 600, and at operation 602 a CAD model of a target AM component is generated. The CAD model includes definitions, measurements and geometries of the target AM component in its targeted final form, and the CAD model is exported in an AM software readable format at operation 604. At operation 606, the deformation of one or more areas or regions of the AM component are predicted. Based on the predicted deformation, corresponding witness line regions are identified and pre-deformed witness lines profiles for each witness line region are calculated. At operation 608, a build file is generated based on the CAD file, the witness line regions, and the pre-deformed witness lines.

Turning to operation 610, the build file is loaded into an AM manufacturing tool and the AM build is started at operation 612. At operation 614, the AM manufacturing tool deposits the AM material in the witness line regions according to the pre-deformed witness line profiles included in the build file. The deposition of AM material includes performing a series of AM material depositions and AM material deposition pauses to build the AM material layer-by-layer at a first target region of the target area while avoiding deposition of the AM material at a second target region of the target area to form a plurality of layered AM witness having the target pre-deformed profile and separated from one another by a space or area that exclude the AM material.

At operation 616, the build process continues after applying a thermal heat treatment to the built AM component. The thermal heat treatment can include, for example, performing thermal cycling in the build chamber to set and cure the sintered AM material. According to one or more non-limiting embodiments, the pre-deformed witness lines can realize deformation while settling during the AM component build prior to the thermal treatment, during the thermal heat treatment, and/or while settling after completing the thermal heat treatment. In one or more non-limiting embodiments, the pre-deformed witness can be formed with a pre-deformed profile that is expected to deform into a target profile following a curing process. In this manner, the AM component can be built with the pre-deformed witness lines by a first party such as an original equipment manufacturer (OEM) and transferred to a second party such as an original design manufacturer (ODM), where curing is performed. The second party can then confirm that the AM component has met its target physical profile when the deformation of the witness lines following the curing matches.

At operation 618, the build process concludes and the curing process is completed such that the pre-deformed witness lines are deformed into a targeted profile indicating that the AM component has realized its predicted distortion to reach a final shape that yields the expected or targeted accurate shape. After confirming the witness lines correspond to an accurate profile, the method ends at operation 620.

As described herein, various non-limiting embodiments provide an AM component including witness lines, and method for fabricating the same. According to one or more non-limiting embodiments, an AM build file can be generated which controls the AM tool to form witness lines during the initial AM fabrication build of the component. The witness lines can be formed with a pre-deformed profile that is defined based in part on the predicted distortion expected for the component. During the secondary processes, the component will realize the expected distortion, which in turn deforms the witness lines into a target shape or profile that indicates the component has realized its predicted distortion to reach a targeted physical profile, e.g., a final shape that yields the expected or targeted accurate shape. In this manner, target specifications and profiles of an AM component following the AM build process can be quickly and accurately ascertained by a human without the need to rely on additional analysis tools or devices.

## Claims

1. A method of manufacturing an additive manufactured (AM) component (100), the method comprising:
generating a computer-aided design (CAD) model of target AM component (100) having a target physical profile;
predicting deformation of a target area that is expected to realize deformation;
determining a pre-deformed profile of witness lines (121) that are to be formed in the target area based on the predicted deformation of the target area and that are expected to deform into a target profile indicating the target physical profile is met; and
performing an AM component build to build the AM component (100) and forming pre-deformed witness lines (121) having the pre-deformed profile in the target area,
wherein the pre-deformed witness lines (121) deform into an expected profile indicating the target component (100) has realized its predicted distortion to reach a final shape that yields the target physical profile.

2. The method of claim 1, wherein the pre-deformed witness lines (121) deform from the pre-deformed profile while settling during the AM component build prior to applying a thermal treatment to the AM component (100).

3. The method of claim 1, wherein the pre-deformed witness lines (121) deform from the pre-deformed profile during the thermal treatment.

4. The method of claim 1, wherein the pre-deformed witness lines (121) deform from the pre-deformed profile while settling after completing the thermal treatment.

5. The method of any of claims 1 to 4, wherein the target physical profile is confirmed in response the deformed profile of the witness lines (121) matching the target profile.

6. The method of any preceding claim, further comprising:
generating a build file based on the CAD model, the target area, and the pre-deformed profile of the witness lines (121);
loading the build file into an AM build machine; and
performing the AM build based on the build file,
wherein the AM build machine forms the pre-deformed witness lines (121) having the pre-deformed profile in the target area.

7. The method of claim 6, wherein performing the AM build includes performing a series of AM material depositions and AM material deposition pauses to build the AM material layer-by-layer at a first target region of the target area while avoiding deposition of the AM material at a second target region of the target area to form the pre-deformed witness lines (121) having the pre-deformed profile in the target area.

## Patentansprüche

1. Verfahren zur Herstellung einer additiv gefertigten (AM) Komponente (100), wobei das Verfahren umfasst:
Erzeugen eines computergestützten Designmodells (CAD-Modells) einer additiv gefertigten (AM) Zielkomponente (100) mit einem physikalischen Zielprofil;
Vorhersagen einer Verformung eines Zielbereichs, bei dem erwartet wird, dass er eine Verformung erfährt;
Bestimmen eines vorverformten Profils von Zeugenlinien (121), die in dem Zielbereich ausgebildet werden sollen, basierend auf der vorhergesagten Verformung des Zielbereichs, und bei denen erwartet wird, dass sie sich in ein Zielprofil verformen, das anzeigt, dass das physikalische Zielprofil erreicht ist; und
Durchführen eines AM-Komponentenbaus, um die AM-Komponente (100) zu bauen, und Ausbilden von vorverformten Zeugenlinien (121) mit dem vorverformten Profil in dem Zielbereich,
wobei sich die vorverformten Zeugenlinien (121) in ein erwartetes Profil verformen, das anzeigt, dass die Zielkomponente (100) ihre vorhergesagte Verformung erfahren hat, um eine Endform zu erreichen, die das physikalische Zielprofil ergibt.

2. Verfahren nach Anspruch 1, wobei sich die vorverformten Zeugenlinien (121) aus dem vorverformten Profil verformen, während sie sich während des AM-Komponentenbaus setzen, vor dem Anwenden einer Wärmebehandlung auf die AM-Komponente (100).

3. Verfahren nach Anspruch 1, wobei sich die vorverformten Zeugenlinien (121) während der Wärmebehandlung aus dem vorverformten Profil verformen.

4. Verfahren nach Anspruch 1, wobei sich die vorverformten Zeugenlinien (121) aus dem vorverformten Profil verformen, während sie sich nach Abschluss der Wärmebehandlung setzen.

5. Verfahren nach einem der Ansprüche 1 bis 4, wobei das physikalische Zielprofil als Reaktion darauf bestätigt wird, dass das verformte Profil der Zeugenlinien (121) mit dem Zielprofil übereinstimmt.

6. Verfahren nach einem der vorangehenden Ansprüche, ferner umfassend:
Erzeugen einer Baudatei basierend auf dem CAD-Modell, dem Zielbereich und dem vorverformten Profil der Zeugenlinien (121); Laden der Baudatei in eine AM-Baumaschine; und
Durchführen des AM-Baus basierend auf der Baudatei,
wobei die AM-Baumaschine die vorverformten Zeugenlinien (121) mit dem vorverformten Profil in dem Zielbereich ausbildet.

7. Verfahren nach Anspruch 6, wobei das Durchführen des AM-Baus das Durchführen einer Reihe von AM-Materialabscheidungen und AM-Materialabscheidungspausen umfasst, um das AM-Material Schicht für Schicht in einem ersten Zielbereich des Zielbereichs aufzubauen, während eine Abscheidung des AM-Materials in einem zweiten Zielbereich des Zielbereichs vermieden wird, um die vorverformten Zeugenlinien (121) mit dem vorverformten Profil in dem Zielbereich auszubilden.

## Revendications

1. Procédé de préparation d'un composant (100) fabriqué de manière additive (AM), le procédé comprenant :
la génération d'un modèle de conception assistée par ordinateur (CAO) du composant (100) AM cible présentant un profil physique cible ;
la prédiction d'une déformation d'une zone cible qui devrait subir une déformation ;
la détermination d'un profil prédéformé des lignes (121) de témoin qui doivent se former dans la zone cible en fonction de la déformation prévue de la zone cible et qui devraient se déformer en un profil cible indiquant que le profil physique cible est atteint ; et
la réalisation d'une construction de composant (100) AM pour construire ce composant AM et former des lignes (121) de témoin prédéformées présentant le profil prédéformé dans la zone cible, dans lequel les lignes (121) de témoin prédéformées se déforment en un profil attendu indiquant que le composant (100) cible a réalisé sa distorsion prévue pour atteindre une forme finale qui donne le profil physique cible.

2. Procédé selon la revendication 1, dans lequel les lignes (121) de témoin prédéformées se déforment à partir du profil prédéformé tout en se stabilisant pendant la construction du composant AM avant d'appliquer un traitement thermique au composant (100) AM.

3. Procédé selon la revendication 1, dans lequel les lignes (121) de témoin prédéformées se déforment à partir du profil prédéformé pendant le traitement thermique.

4. Procédé selon la revendication 1, dans lequel les lignes (121) de témoin prédéformées se déforment à partir du profil prédéformé tout en se stabilisant après la fin du traitement thermique.

5. Procédé selon l'une quelconque des revendications 1 à 4, dans lequel le profil physique cible est confirmé en réponse au profil déformé des lignes (121) de témoin correspondant au profil cible.

6. Procédé selon une quelconque revendication précédente, comprenant également :
la génération d'un fichier de construction basé sur le modèle CAO, la zone cible et le profil prédéformé des lignes (121) de témoin ;
le chargement du fichier de construction dans une machine de construction AM ; et
la réalisation de la construction AM basée sur le fichier de construction,
dans lequel la machine de construction AM forme les lignes (121) de témoin prédéformées présentant le profil prédéformé dans la zone cible.

7. Procédé selon la revendication 6, dans lequel la réalisation de la construction AM comporte la réalisation d'une série de dépôts de matériau AM et de pauses de dépôt de matériau AM pour construire le matériau AM couche par couche dans une première région cible de la zone cible tout en évitant le dépôt du matériau AM dans une seconde région cible de la zone cible pour former les lignes (121) de témoin prédéformées présentant le profil prédéformé dans la zone cible.
